# EUROPÄISCHE PATENTSCHRIFT

(11) **EP 2 602 213 B1**
(45) Veröffentlichungstag und Bekanntmachung des Hinweises auf die Patenterteilung: **08.11.2017**
(21) Anmeldenummer: 12196364.9
(22) Anmeldetag: 10.12.2012
(51) Int. Cl.: B65G 1/137

(54) **Kombinierte Kommissionierung mit Kommissionierfahrzeugen und einer Lagendepalettiervorrichtung**
Combined picking with picking vehicles and a storage palletizing device
Préparation des commandes combinée avec véhicules de préparation des commandes et un dispositif de palettisation pour stockage

(30) Priorität: 10.12.2011 DE 102011056254
(43) Veröffentlichungstag der Anmeldung: 12.06.2013
(73) Patentinhaber: Winkler, Walter, 92711 Parkstein (DE)
(72) Erfinder: Winkler, Walter, 92711 Parkstein (DE)
(74) Vertreter: Lang, Christian

(56) Entgegenhaltungen:
- US-A1- 2002 021 954
- US-A1- 2003 176 943

## Beschreibung

### HINTERGRUND DER ERFINDUNG

### GEBIET DER ERFINDUNG

Die vorliegende Erfindung betrifft eine Vorrichtung zur Kommissionierung von Waren in eine Transporteinheit, die eine Vielzahl von Waren aufnehmen kann, wie beispielsweise eine Transporteinheit auf Basis einer Euro-Palette oder eines Rollcontainers. Die Erfindung betrifft weiter eine Vorrichtung zur Kommissionierung mit einem automatischen Palettenlager mit mindestens einem Lagerfahrzeug, in welchem Wareneinheiten mit jeweils einer Vielzahl von Waren durch das Lagerfahrzeug automatisiert ein- und ausgelagert werden können, und mit mindestens einer Kommissionierstrecke, die eine Mehrzahl von Bereitstellungsplätzen für Wareneinheiten und mindestens einen Kommissionierpfad aufweist, entlang dem sich ein Kommissionierfahrzeug mit mindestens einer Transporteinheit bewegen kann, in welche die Waren, die aus den Bereitstellungsplätzen entnommen und in diese zurück gebracht werden können, kommissioniert werden. Weiterhin betrifft die vorliegende Erfindung ein entsprechendes Kommissionierverfahren.

### STAND DER TECHNIK

Im Einzelhandel ist es für die Versorgung von Einzelhandelsgeschäften notwendig, in Zentrallagern, in denen Waren in großen Mengen gelagert und/oder umgeschlagen werden, Waren für den Versand an die Einzelhandelsgeschäfte zu kommissionieren. In den Zentrallagern werden üblicherweise große Mengen gleicher Waren angeliefert, die in bestimmten Wareneinheiten verpackt sind, wie beispielsweise auf Euro-Paletten oder dergleichen. Da in Einzelhandelsgeschäften üblicherweise in einem bestimmten Zeitraum nur eine beschränkte Anzahl gleicher Waren benötigt wird, werden die Waren im Zentrallager vereinzelt, also aus der Wareneinheit entnommen, und zusammen mit anderen Waren in eine Transporteinheit gepackt, mittels der die Waren zu den Einzelhandelsgeschäften versendet werden. Die Zusammenstellung einer Transporteinheit mit vielen verschiedenen Waren wird üblicherweise als Kommissionierung bezeichnet. Allerdings ist die Kommissionierung nicht nur auf die Versorgung von Einzelhandelsgeschäften durch ein Zentrallager beschränkt, sondern auch die Zusammenstellung einer Bestellung eines Einzelkunden beispielsweise im Versandhandel kann einen entsprechenden Kommissioniervorgang auslösen. Andere Beispiele sind die Zusammenstellung von Bauteilen in der Industrieproduktion und dergleichen, sodass viele unterschiedliche Anwendungsgebiete für Kommissioniervorgänge existieren.

Je nach Art der zu kommissionierenden Waren, der Anzahl der unterschiedlichen zu kommissionierenden Waren sowie der anfallenden Kommissioniermenge können unterschiedliche Kommissionierverfahren und -systeme eingesetzt werden.

Ein bekanntes Kommissioniersystem besteht darin, Kommissionierplätze vorzusehen, wobei jedem Kommissionierplatz eine Vielzahl von Waren zugeordnet werden kann. Die Kommissionierstrecke umfasst eine Vielzahl von Kommissionierplätzen für die vielen verschiedenen zu kommissionierenden Waren. In jedem Kommissionierplatz ist eine Art von Ware gelagert und die Kommissionierung erfolgt nach dem Prinzip Mann-zur-Ware, bei dem sich ein Kommissionierer mit einer Transporteinheit, in die die verschiedenen Waren zu kommissionieren sind, entlang der Kommissionierstrecke bewegt, um die zu kommissionierenden Waren aus den Kommissionierplätzen zu holen und in der Transporteinheit abzulegen.

Die DE 10 2009 026 386 A1 beschreibt ein halbautomatisches Kommissioniersystem, wobei Wareneinheiten, die von einem Eingangsmodul zugeleitet werden, durch eine Depalettiervorrichtung vereinzelt werden und als Einzelwaren im Regal eines Regallagers eingelagert werden. Zur Einlagerung sowie der Entnahme von Waren in das bzw. aus dem Regal werden Regalfahrzeuge eingesetzt, wobei die Entnahme der Waren durch einen Bediener erfolgt, der manuell bestimmte Waren aus dem Regallager entnimmt. Sollen jedoch mehrere Einzelwaren derselben Art kommissioniert werden, so muss jede Einzelware einzeln umgeschichtet werden, was zu einem erheblichen Aufwand des Bedieners des Fahrzeugs führt.

Dieses Prinzip kann mit einem automatisierten Lager kombiniert werden, wobei aus dem Lager automatisiert die entsprechenden Waren in die Kommissionierplätze gebracht werden können. Dadurch entfällt die manuelle Bereitstellung der Waren in den Kommissionierplätzen und die Effizienz der Kommissionierung wird erhöht. Obwohl damit bereits eine Effizienzsteigerung gegeben ist, besteht weiterhin Bedarf, ein entsprechendes Kommissionierverfahren bzw. -system bezüglich der Effizienz zu optimieren.

Es ist dabei insbesondere wünschenswert dass der Komnüssionierprozess bei der Einlagerung und Entnahme derselben Art an Einzelwaren beschleunigt wird.

Ein weiteres Kommissioniersystem nach dem Prinzip Mann-zur-Ware ist in der US 2002/0021954 A1 offenbart. Bei diesem Verfahren werden die zu kommissionierenden Waren aus Lager- bzw. Bereitstellungsplätzen auf ein vorbeifahrendes Komütnissionierfahrzeug kommissioniert.

Das Dokument US 2003/0176943 A1 offenbart ein Behälterlager - und - liefersytem, bei dem ein sogenanntes Lagenspeicher - und - liefersystem vorgesehen ist, in dem vollständige Lagen für das Behälterlager und -liefersystem entnommen und geliefert werden können.

### OFFENBARUNG DER ERFINDUNG

### AUFGABE DER ERFINDUNG

Es ist deshalb Aufgabe der vorliegenden Erfindung eine Vorrichtung bzw. ein Verfahren zur Kommissionierung von Waren bereitzustellen, welches unter Berücksichtigung des ursprünglichen Kommissionierprinzips nach dem Prinzip Mann-zur-Ware eine weitere Effizienzsteigerung ermöglicht. Dabei soll das System bzw. eine entsprechende Vorrichtung und das Verfahren flexibel einsetzbar sein und mit möglichst niedrigem Aufwand realisierbar sein.

### TECHNISCHE LÖSUNG

Diese Aufgabe wird gelöst durch eine Vorrichtung mit den Merkmalen des Anspruchs 1 sowie ein Verfahren mit den Merkmalen des Anspruchs 10. Vorteilhafte Ausgestaltungen sind Gegenstand der abhängigen Ansprüche.

Die vorliegende Erfindung zeichnet sich dadurch aus, dass bei einer Vorrichtung zur Kommissionierung von Waren in eine Transporteinheit eine Kommissionierstrecke mit einer Vielzahl von Kommissionierplätzen für Wareneinheiten, die in Verbindung mit einem automatisierten Lager für die Wareneinheiten betrieben wird, mit einer Lagendepalettiervorrichtung kombiniert wird, um zusätzlich die Möglichkeit zu haben, eine automatisierte, lagenweise Kommissionierung vorzunehmen. Somit kann sich vor und/oder nach der lagenweise Kommissionierung eine Einzelwarenkommissionierung anschließen.

Die erfindungsgemäß vorgesehene Lagendepalettiervorrichtung ist mit dem Palettenlager in der Weise verbunden, dass Wareneinheiten aus dem Palettenlager automatisiert zur Lagendepalettiervorrichtung hin und von dieser weg bewergbar sind, sodass die Lagendepalettiervorrichtung die Waren lagenweise von der Wareneinheit entnehmen kann. Dadurch ist es möglich, die Effizienz der Kommissionierung zu steigern, da durch die Lagendepalettiervorrichtung Waren nach Auflösung einer Wareneinheit nicht nur einzel gehandhabt werden, sondern zumindest teilweise zusätzlich lagenweise.

Die Kombination einer Kommissioniervorrichtung, bei welcher nach dem Prinzip Mann-zur-Ware ein Kommissionierer sich mit einer Transporteinheit, in die die verschiedenen Waren kommissioniert werden, entlang einer Kommissionierstrecke bewegt, mit einer Lagendepalettiervorrichtung, ermöglicht, die bei der Kommissionierung vorkommenden Fälle, bei denen eine gesamte Lage einer bestimmten Ware in eine Transporteinheit kommissioniert werden soll, effizient und automatisiert mit einer Lagendepalettiervorrichtung auszuführen. Durch kurze Wege der Wareneinheiten aus dem automatisierten Lager zur Lagendepalettiervorrichtung können ohne großen Aufwand die für die Kommissionierung erforderlichen Waren aus dem Lager zur Lagendepalettiervorrichtung herangeführt und nach der Lagendepalettierung auch wieder in das automatisierte Lager zurückgeführt werden. Insbesondere kann mit einem relativ geringen Aufwand eine schnelle Sequenz an unterschiedlichen Waren realisiert werden, bei der die unterschiedlichsten Waren aus dem Lager entsprechend der Anforderung der Kommissionierung zu der Lagendepalettiervorrrichtung zugeführt werden, um dort lagenweise depalettiert zu werden.

Entsprechend weist die Vorrichtung zur Kommissionierung von Waren ein automatisiertes Palettenlager auf, wobei der Begriff Palettenlager hier nicht einschränkend verwendet wird, sondern lediglich zur Abgrenzung dazu dient, dass dieses Lager Wareneinheiten mit einer Mehrzahl von Waren aufnimmt, und nicht einzelne Waren in dem Lager eingelagert sind. Der Begriff Palettenlager verdeutlicht also nur, dass die in dem Palettenlager eingelagerten Wareneinheiten zumindest teilweise jeweils eine Vielzahl von Waren aufweisen, das heißt mindestens zwei oder mehr Waren, die zusammen in der Wareneinheit in dem Lager bewegt werden. Das Palettenlager muss also nicht notwendigerweise zur Lagerung von Paletten im eigentlichen Wortsinn dienen, auch wenn dies natürlich vorzugsweise möglich ist.

Die Kommissioniervorrichtung kann hierbei mindestens ein Palettenlager, vorzugsweise mehrere und insbesondere zwei Palettenlager aufweisen, die eine gemeinsame Lagendepalettiervorrichtung umfassen. Bei der Anordnung von einer Lagendepalettiervorrichtung zwischen zwei Palettenlagern, bei denen jedes Palettenlager vorzugsweise mindestens jeweils eine Lagergasse mit einem Regalfahrzeug zur automatisierten Ein- und Auslagerung der Wareneinheiten aufweist, sind die oben angesprochenen kurzen Wege zwischen dem Lager und der Lagendepalettiervorrichtung besonders einfach möglich, sodass ohne großen Aufwand für Fördereinrichtungen und Nachverfolgungssysteme für die transportierten Wareneinheiten die sequenzielle Zufuhr der verschiedenen Wareneinheiten in der richtigen Reihenfolge erfolgen kann. Entsprechend kann auch eine schnelle Sequenz der aufeinanderfolgend ausgelagerten Wareneinheiten, die der Palettendepalettiervorrichtung zugeführt werden, realisiert werden, sodass eine hohe Taktfrequenz erzielbar ist. Darüber hinaus verringern die kurzen Wege auch den Aufwand für eine entsprechende Steuerungs- und Regelungseinheit für die Vorrichtung.

Darüber hinaus ist bei der Vorrichtung zur Kommissionierung von Waren eine Kommissionierstrecke vorgesehen, die eine Mehrzahl von Kommissionierplätzen für Wareneinheiten und mindestens einen Kommissionierpfad aufweist, entlang dem sich ein Kommissionierfahrzeug mit mindestens einer Transporteinheit bewegen kann, in welche die zu kommissionierenden Waren gepackt werden. Das Kommissionierfahrzeug kann manuell oder automatisiert gesteuert und/oder angetrieben werden.

Die von der Lagendepalettiervorrichtung erzeugten Lagen aus Waren können zur weiteren Handhabung bereitgestellt werden oder unmittelbar in einer Transporteinheit abgelegt werden. Entsprechend kann die Lagendepalettiervorrichtung einen Lagenkommissionierplatz umfassen, an dem eine Transporteinheit zur Aufnahme der depalettierten Warenlagen bereitgestellt werden kann. Die Lagendepalettiervorrichtung kann in einem Arbeitsgang eine oder mehrere Lagen abnehmen.

Der Lagenkommissionierplatz kann hierbei in der Kommissionierstrecke angeordnet sein, sodass die Transporteinheit auf einem Kommissionierfahrzeug angeordnet ist, während die Lagendepalettiervorrichtung die Lage von Waren in der Transporteinheit anordnet. Alternativ ist es jedoch auch möglich, dass der Lagenkommissionierplatz der Lagendepalettiervorrichtung durch entsprechende Fördereinrichtungen mit Einrichtungen zum Versand der Transporteinheiten oder auch mit einem separaten Lager oder dem Palettenlager verbunden ist, um die vollständig oder teilweise lagenweise kommissionierten Transporteinheiten in den entsprechenden Lagern zwischenlagern zu können oder zur Weiterbearbeitung an ein Kommissionierfahrzeug oder andere Kommissioniersysteme zu übergeben.

Das Palettenlager oder ein separates Lager für die fertig oder teilweise kommissionierten Wareneinheiten können insbesondere als Hochregallager ausgebildet sein, da dieses platzsparend ist. Vorzugsweise können zwei gegenüberliegende Regale ein Lager bilden, wobei zwischen den Regalen eine Fahrgasse für ein Regalfahrzeug zum Ein- und Auslagern der Wareneinheiten bzw. der Transporteinheiten vorgesehen sein kann.

Ein entsprechendes Hochregallager kann zumindest einen Teil der Kommissionierplätze der Kommissionierstrecke in Durchlaufkanälen eines Regals des Hochregallagers bereitstellen, sodass die Bestückung der Kommissionierplätze der Kommissionierstrecke vollständig automatisiert durch das automatisierte Hochregallager erfolgen kann.

Insgesamt kann die Vorrichtung zur Kommissionierung modular aufgebaut sein, wobei beispielsweise jedes Modul mindestens ein Palettenlager, mindestens eine Kommissionierstrecke und mindestens eine Lagendepalettiervorrichtung aufweisen kann. Die einzelnen Komponenten der Module, wie beispielsweise Lagendepalettiervorrichtung oder Kommissionierstrecke, können von mehreren Modulen gemeinsam genutzt werden.

Zwischen der Lagendepalettiervorrichtung und dem automatisierten Palettenlager kann ein Fördersystem vorgesehen sein, welches die Wareneinheiten aus dem Palettenlager zu der Lagendepalettiervorrichtung befördert. Das Fördersystem kann eine ausgelagerte Wareneinheit an einem Auslagerungsplatz für Wareneinheiten von dem Palettenlager übernehmen und über Bandförderer, Rollenförderer oder dergleichen zu der Lagendepalettiervorrichtung befördern.

Das Fördersystem kann einen kurzen Förderweg mit insbesondere wenigen Abzweigungen, Kreuzungen oder Einmündungen aufweisen, um den Aufwand für die Beförderung der Wareneinheiten aus dem Palettenlager zur Lagendepalettiervorrichtung niedrig zu halten und auch den Aufwand für eine Überwachung und Identifizierung der depalettierten Waren klein zu halten.

Durch einen kurzen Förderweg zwischen dem Palettenlager und der Lagendepalettiervorrichtung ist es für das Steuer- und Regelungssystem möglich, weitgehend ohne zusätzliche Identifizierungseinrichtungen zur Identifizierung der Waren nachzuverfolgen, welche Waren ausgelagert wurden und von der Lagendepalettiervorrichtung depalettiert werden. Auf diese Weise ist es möglich, sehr effizient die Waren gemäß dem Kommissionierauftrag in der richtigen Reihenfolge der Lagendepalettiervorrichtung zuzuführen. Insbesondere ist es möglich, eine schnelle und kurze Sequenz aus aufeinanderfolgenden Wareneinheiten an die Lagendepalettiervorrichtung zu senden, sodass der Steuerungsaufwand niedrig gehalten werden kann.

Entsprechend kann der Förderweg so ausgebildet sein, dass weniger oder gleich 20 Wareneinheiten gleichzeitig auf dem Förderweg zwischen Palettenlager und Lagendepalettiervorrichtung, vorzugsweise weniger oder gleich 15 Wareneinheiten aufgenommen sind.

Durch die Vermeidung von Abzweigungen, Kreuzungen oder Einmündungen im Förderweg kann ebenfalls die Nachverfolgung der Wareneinheiten einfach gehalten werden und auf zusätzlich Identifizierungssysteme verzichtet werden. Entsprechend kann der Förderweg des Fördersystems maximal eine oder gar keine Abzweigung, Kreuzung oder Einmündung aufweisen.
Das Palettenlager kann mindestens einen Abgabeplatz für Wareneinheiten aufweisen, an dem Wareneinheiten auf ein Kommissionierfahrzeug überführbar sind, sodass aus den Wareneinheiten entsprechende Transporteinheiten werden. Dies ist für den Fall vorteilhaft, dass im Palettenlager teilgefüllte Wareneinheiten von der Lagendepalettiervorrichtung zwischengelagert werden und diese dann bei einem passenden neuen Kommissionierauftrag oder zur Fortsetzung eines begonnenen Kommissionierauftrags direkt als Transporteinheit Verwendung finden können.

Bei dem erfindungsgemäßen Verfahren, welches insbesondere mit einer erfindungsgemäßen Vorrichtung zur Kommissionierung durchgeführt werden kann, können die Kommissioniervorgänge unterschiedlich kombiniert und flexibel durchgeführt werden. So kann beispielsweise eine Transporteinheit lediglich durch manuelle Kommissionierung mit den Kommissionierfahrzeugen durchgeführt werden. Entsprechend kann auch lediglich eine Kommissionierung mit einer Lagenkommissionierung über die Lagendepalettiervorrichtung durchgeführt werden. Darüber hinaus ist es möglich beide Kommissionierverfahren zu kombinieren, also Transporteinheiten zu erzeugen, bei denen teilweise die Waren manuell entlang der Kommissionierstrecke kommissioniert werden und teilweise automatisiert eine lagenweise Kommissionierung mittels der Lagendepalettiervorrichtung stattfindet. Darüber hinaus ist durch die Einbindung eines entsprechenden automatisierten Lagers die zwischenzeitliche Einlagerung von teilweise oder vollständig kommissionierten Transporteinheiten möglich, wobei die teil oder vollständig kommissionierten Transporteinheiten in dem Palettenlager oder einem separaten Lager zwischengelagert werden können.

Aus dem Palettenlager oder einem separaten Lager können die zwischengelagerten Transporteinheiten wieder in den Kommissioniervorgang eingeschleust werden, also beispielsweise an ein Kommissionierfahrzeug übergeben werden, oder anderen Systemen zur Kommissionierung, die beispielsweise benachbart zur erfindungsgemäßen Kommissioniervorrichtung angeordnet sind, übergeben werden.

### KURZBESCHREIBUNG DER FIGUREN

Die beigefügten Zeichnungen zeigen in reinschematischer Weise in
Fig. 1 eine Draufsicht auf einen horizontalen Schnitt durch eine Anlage zur Kommissionierung von Waren gemäß der vorliegenden Erfindung;
Fig. 2 eine Querschnittsansicht durch eine Kommissionieranlage gemäß Fig. 1;
Fig. 3 eine detaillierte Draufsicht auf die Kommissionieranlage aus Fig. 1 in einer ersten Ebene;
Fig. 4 eine Draufsicht auf die Kommissionieranlage gemäß Fig. 3 in einer Schnittebene darüber; und in
Fig. 5 in den Teilbildern a) bis d) Querschnittsansichten der Lagendepalettiervorrichtung aus den Fig. 1 und 3 zur Verdeutlichung des Betriebs derselben.

### AUSFÜHRUNGSBEISPIEL

Weitere Vorteile, Kennzeichen und Merkmale der vorliegenden Erfindung werden bei der nachfolgenden detaillierten Beschreibung eines Ausführungsbeispiels anhand der beigefügten Zeichnungen deutlich. Allerdings ist die Erfindung nicht auf dieses Ausführungsbeispiel beschränkt.

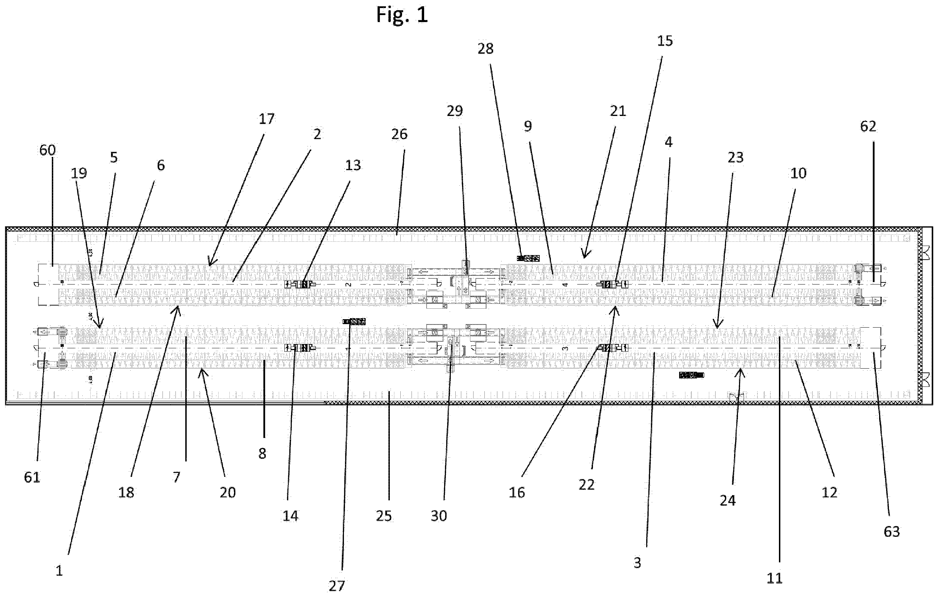

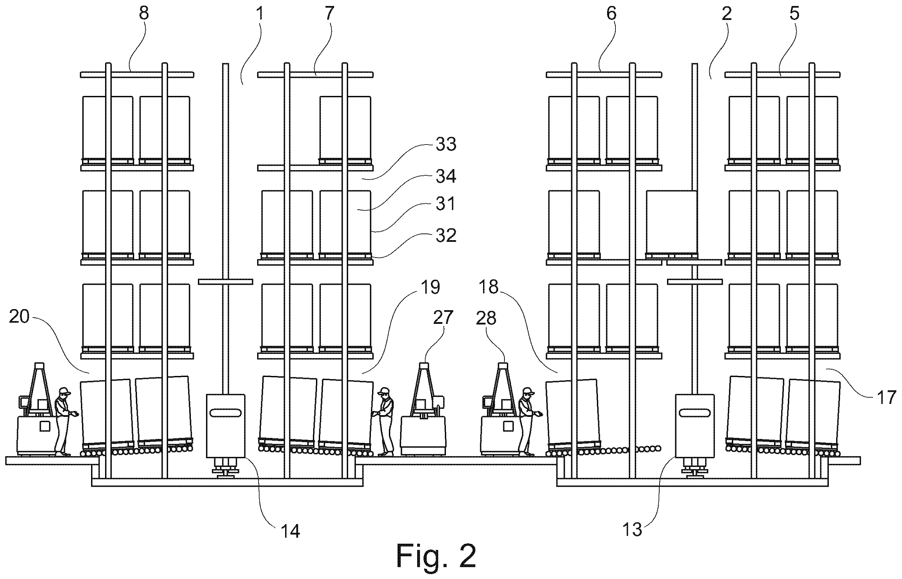

Die Fig. 1 zeigt eine Draufsicht auf einen horizontalen Schnitt einer erfindungsgemäßen Vorrichtung bzw. Anlage zur Kommissionierung von Waren. Die Kommissioniervorrichtung umfasst vier Hochregallager mit jeweils zwei Hochregalen 5, 6; 7, 8; 9, 10; 11, 12, die jeweils zwischen sich eine Lagergasse 1, 2, 3, 4 einschließen, in welcher jeweils ein Regalfahrzeug 13, 14, 15, 16 verfahrbar angeordnet ist. Die Hochregallager 5 bis 12 weisen eine Vielzahl von Lagerplätzen 33 (siehe Fig. 2) auf, in denen Wareneinheiten 31 gelagert sind, die beispielsweise aus einer Euro-Palette 32 und einer Vielzahl von darauf gestapelten Waren 34 aufgebaut sind.

Die Regalfahrzeuge 13 bis 16 können sich entlang der Lagergassen 1 bis 4 sowie senkrecht dazu bewegen, sodass sie sämtliche Lagerplätze 33 in den Regalen 5 bis 12 erreichen können, um dort Wareneinheiten 31 ein- und auszulagern. Außerdem sind an den Enden der Lagergassen 1 bis 4 Abgabeplätze 60 bis 63 vorgesehen, die eine Abgabe von Wareneinheiten an Kommissionierfahrzeuge ermöglichen. Die Zufuhr der Wareneinheiten in die Lager erfolgt in einer anderen Ebene, oberhalb oder unterhalb der Kommissionierebene.

Darüber hinaus umfasst die in Fig. 1 gezeigte Vorrichtung zur Kommissionierung von Waren in der untersten Reihe der Hochregale 5 bis 12 in der Kommissionierebene sogenannte Durchlaufkanäle, die an den von der Lagergasse 1 bis 4 abgewandten Seiten Kommissionierplätze 17, 18, 19, 20, 21, 22, 23, 24 für die Wareneinheiten 31 bereitstellen. Die Durchlaufkanäle weisen hierzu schräg gestellte Böden auf, die in Form von Rollenförderern ausgebildet sind, sodass Wareneinheiten 31, die durch die Regalfahrzeuge 13 bis 16 von den Lagergassen 1 bis 4 in die Durchlaufkanäle abgegeben werden, an die Kommissionierplätze 17 bis 24 an den von den Lagergassen 1 bis 4 abgewandten Seiten der Regale 5 bis 12 bewegt werden.

Die Kommissionierplätze 17 bis 24 definieren eine Kommissionierstrecke entlang der Kommissionierfahrzeuge 27, 28 verfahren werden können, um aus den in den Kommissionierplätzen 17 bis 24 angeordneten Wareneinheiten 31 entsprechende Waren zu entnehmen und in einer Transporteinheit anzuordnen, die auf den Kommissionierfahrzeugen 27, 28 mitgeführt wird. Die Kommissionierplätze 17 bis 24 in den Hochregalen 5 bis 12 werden durch die Regalfahrzeuge 13 bis 16 vollautomatisiert bestückt, wobei eine entsprechende computergestützte Steuerung, die den gesamten Kommissioniervorgang steuert, den Regalfahrzeugen 13 bis 16 die entsprechende Befehle zur Ein- und Auslagerung von Wareneinheiten und Bereitstellung in den Kommissionierplätzen 17 bis 24 liefert.

Neben den automatisiert bestückbaren Kommissionierplätzen 17 bis 24 sind manuell bestückbare Kommissionierplätze 25 und 26 vorgesehen, wie in Fig. 1 gezeigt ist, um zusätzlich manuell Wareneinheiten 31 für die Kommissionierung bereitzustellen.

Die Kommissionierung erfolgt nun in der Weise, dass die Kommissionierfahrzeuge 27, 28 entlang den Kommissionierplätzen 17 bis 26, die gleichzeitig die Kommissionierstrecke definieren auf einem Kommissionierpfad bewegt werden, der sich im Bereich vor den Kommissionierplätzen 17 bis 24 befindet, um die in den Kommissionierplätzen in den Wareneinheiten gelagerten Waren entsprechend der Aufforderung durch die Kommissioniersteuerung zu entnehmen und in den Transporteinheiten abzulegen. Die Transporteinheiten können hierbei genauso wie bei den Wareneinheiten Euro-Paletten aufweisen, auf denen die Waren gestapelt werden oder es können andere Träger, wie beispielsweise Rollkontainer oder dergleichen eingesetzt werden.

Die Kommissioniersteuerung kann dem Bediener der Kommissionierfahrzeuge 27, 28 beispielsweise über eine elektronisches Display anzeigen, welche Waren in welcher Menge an welchen Kommissionierplätzen 17 bis 26 in welcher Reihenfolge entnommen und in den Transporteinheiten abgelegt werden sollen. Neben der Anzeige der entsprechenden Informationen auf einem Display können zusätzliche Hilfsmittel, wie beispielsweise akustische Ansagen, Lichtanzeigen (pick-by-light -, pick-by-voice-Technologie) und dergleichen eingesetzt werden.

Ein Kommissioniervorgang erfolgt dann beispielsweise so, dass ein Kommissionierfahrzeug 27, 28 einen neuen Kommissionierauftrag erhält, beispielsweise über Datenfernverbindung über eine Funkverbindung von der zentralen Steuerung, und durch den Kommissionierauftrag wird dem Bediener des Kommissionierfahrzeugs angezeigt, zu welchen Kommissionierplätzen 17, 26 er in welcher Reihenfolge fahren muss, um die dort gelagerten Waren zu entnehmen und in die Transporteinheit einzulagern. Hierbei ist sowohl vorstellbar, dass das Kommissionierfahrzeug an sich von dem Bediener nicht mehr bedient werden muss, sondern dass das Kommissionierfahrzeug 27, 28 die entsprechenden Kommissionierplätze 17 bis 26 anfährt und der Bediener lediglich manuell die Waren aus den Wareneinheiten 31 in die Transporteinheit überführen muss, oder dass der Bediener zusätzlich das Kommissionierfahrzeug steuern und/oder bewegen muss.

Obwohl die Kommissionierplätze 17 bis 26 lediglich in einer horizontalen Schnittansicht und in einer Querschnittsansicht zu sehen sind, ist selbstverständlich, dass sich genauso wie die Lagerplätze 33 in den Regalen 5 bis 12 auch eine Vielzahl von Kommissionierplätzen entlang der Regale 5 bis 12 befinden. Entsprechend ist der Kommissionierpfad auf dem sich die Kommissionierfahrzeuge 27, 28 bewegen entlang der Regale 5 bis 12 bzw. entlang der Vielzahl der Kommissionierplätze 17 bis 26 definiert.

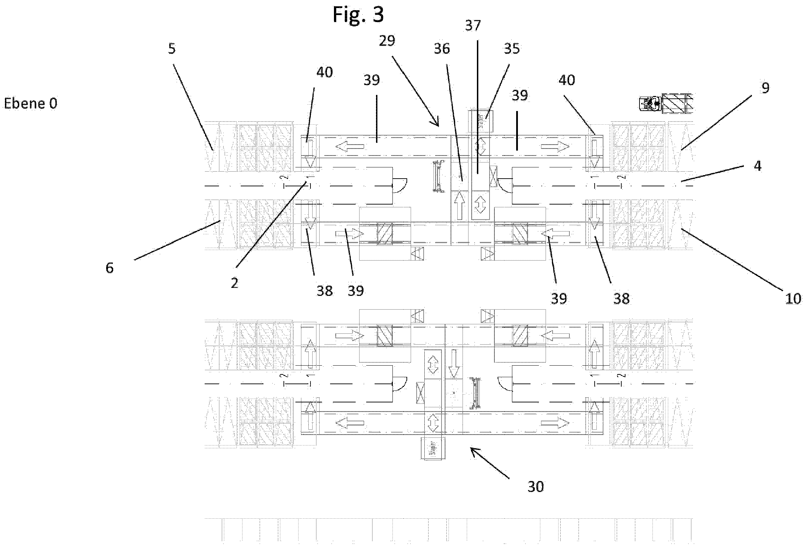

Bei der erfindungsgemäßen Vorrichtung zur Kommissionierung, wie sie in Fig. 1 in einer horizontalen Schnittansicht dargestellt ist, sind zusätzlich zwei Lagendepalettiervorrichtungen 29, 30 vorgesehen, die im Detail in Fig. 3 dargestellt sind. Die Lagendepalettiervorrichtung 29 ist in gleicher Weise aufgebaut wie die Lagendepalettiervorrichtung 30, sodass im Nachfolgenden nur die Lagendepalettiervorrichtung 29 im Einzelnen beschrieben wird.

Die Lagendepalettiervorrichtung 29 ist über Fördersysteme 39, wie beispielsweise Förderbänder, Rollenförderer und dergleichen, mit den Regalen 5, 6, 9, 10 der Hochregallager verbunden, sodass Wareneinheiten 31 über Auslagerungsplätze 38 und Einlagerungsplätze 40 aus den Regalen 5, 6, 9, 10 zu der Lagendepalettiervorrichtung 29 gebracht und wieder in die Regale 5, 6, 9, 10 zurück gelagert werden können. Der große Vorteil hierbei ist, dass durch das Regalfahrzeug die Warenpaletten aus dem Lager in der erforderlichen Sequenz für die Auftragskommissionierpaletten ausgelagert werden können.

Die Lagendepalettiervorrichtung 29 umfasst einen Entnahmeplatz 36 und einen Lagenkommissionierplatz 37. Am Entnahmeplatz 36 werden die Wareneinheiten 31 aus dem mit der Lagendepalettiervorrichtung 29 verbundenen Regalen 5, 6, 9, 10 bereitgestellt, während am Lagenkommissionierplatz 37 eine Transporteinheit angeordnet wird. Am Entnahmeplatz 36 werden die Waren aus den Wareneinheiten 31 lagenweise entnommen und lagenweise in die Transporteinheit 31 am Lagenkommissionierplatz 37 eingelagert. Sobald die Wareneinheit 31 nicht mehr benötigt wird, kann sie über die Fördersysteme 39 und den Einlagerplatz 40 in die Regale 5, 6, 9, 10 zurückgelagert werden.

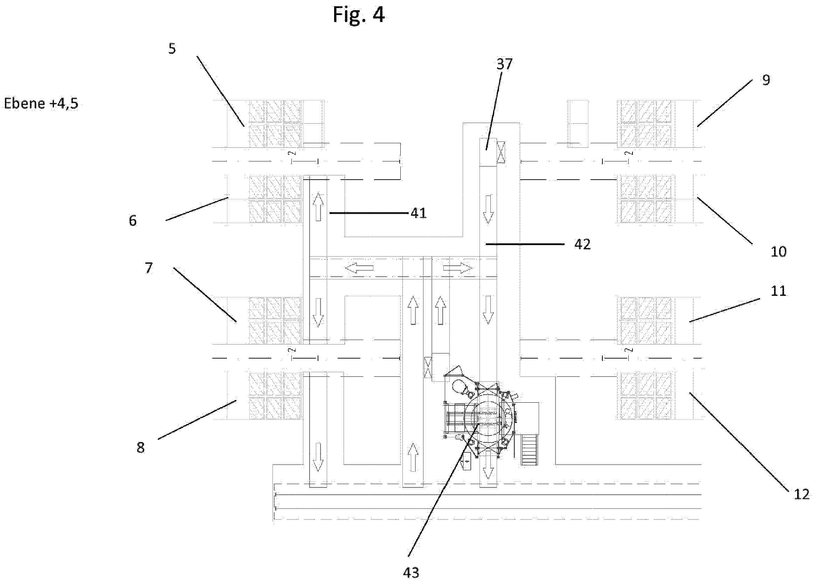

Die Transporteinheit am Lagenkommissionierplatz 37 kann nach erledigter Lagenkommissionierung ebenfalls wieder entfernt werden, was im Detail in Fig. 4 dargestellt ist.

Neben der automatisierten Bereitstellung und Entfernung einer Transporteinheit, wie sie bei dem gezeigten Ausführungsbeispiel gezeigt ist, kann die Lagendepalettiervorrichtung auch so ausgebildet sein, dass beispielsweise ein Kommissionierfahrzeug 27, 28 die Transporteinheit am Lagenkommissionierplatz 37 bereitstellt, wobei das entsprechende Kommissionierfahrzeug automatisch oder durch einen Bediener in die entsprechende Position am Lagenkommissionierplatz 37 gebracht werden kann. Bei dem gezeigten Ausführungsbeispiel wird die Transporteinheit jedoch über automatische Fördersysteme, wie Bandförderer, Rollenförderer oder vergleichbare Fördersysteme an den Lagenkommissionierplatz 27 befördert. Dies erfolgt beispielsweise in einer Ebene oberhalb oder unterhalb der Fördereinrichtung zur Bereitstellung der Wareneinheiten. In Fig. 4 ist beispielsweise eine Ebene oberhalb der Ebene, die in Fig. 3 dargestellt ist, gezeigt, wobei die beiden Ebenen der Figuren 3 und 4 am Lagenkommissionierplatz 37 über einen Senkrechtförderer miteinander verbunden sind, der somit eine Transporteinheit am Lagenkommissionierplatz 37 von einer Ebene in die andere befördern kann.

In der in Fig. 4 dargestellten Ebene wird die lagenweise kommissionierte Transporteinheit über ein Fördersystem 42, das ebenfalls aus entsprechenden Förderbändern, Rollenförderern und dergleichen aufgebaut sein kann, abtransportiert.

Das Fördersystem 42 stellt die Möglichkeit bereit, die Transporteinheit auch in die Regale 5 bis 8 einzulagern, sodass eine vollständig automatisierte lagenweise Kommissionierung unabhängig von der Kommissionierung mit einem Kommissionierfahrzeug 27, 28 durchgeführt werden kann und die Transporteinheiten in den Hochregallagern zwischengelagert werden können, bis sie über eine entsprechende Auslagerung aus den Hochregallagern zum Versand bereitgestellt werden oder von Kommissionierfahrzeugen übernommen werden, um eine zusätzliche manuelle Kommissionierung vorzunehmen. Entsprechend kann in dem als Hochregallager ausgebildeten Palettenlager eine Übergabevorrichtung vorgesehen sein, um Transporteinheiten von Kommissionierfahrzeugen ins Lager zu übernehmen oder abzugeben. Alternativ oder zusätzlich können separate Lager für Transporteinheiten mit entsprechenden Übergabevorrichtungen vorgesehen sein. Darüber hinaus kann die im Ausführungsbeispiel beschriebene Kommissioniervorrichtung selbstverständlich eine nicht näher dargestellte Übergabeeinrichtung aufweisen, um Transporteinheiten von dem Fördersystem 42 oder einer Zuführeinrichtung zum Lagenkommissionierplatz 37 von Kommissionierfahrzeugen zu übernehmen oder an diese abgeben zu können.

Darüber hinaus bietet das Fördersystem 42 die Möglichkeit die Transporteinheit zu einem Folienwickler 43 zu befördern, bei welchem die fertigen Transporteinheiten mit Folie umwickelt werden, um so für den Versand fertig zu sein.

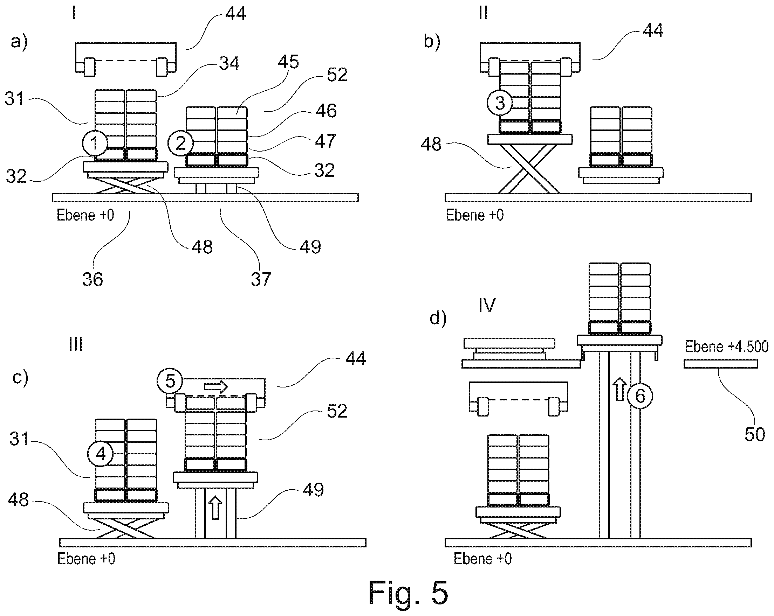

Die Fig. 5 zeigt in einem Schnitt gemäß der Schnittlinie A-A aus Fig. 3 die Funktion der Lagendepalettiervorrichtung. In den Teilbildern a) bis d) sind die verschiedenen Schritte der Lagenkommissionierung mittels des Lagendepalettierers gezeigt.

Bei dem gezeigten Ausführungsbeispiel der Fig. 5 ist am Entnahmeplatz eine Wareneinheit 31 auf einer Hebeeinrichtung 48 angeordnet und oberhalb des Entnahmeplatzes 36 ist eine Lagengreifvorrichtung 44 vorgesehen, die in der Höhe nicht verstellbar ist, jedoch seitlich bewegbar ist, sodass sie oberhalb des Entnahmeplatzes 36 und oberhalb des Lagenkommissionierplatzes 37 angeordnet werden kann. Auf dem Lagenkommissionierplatz 37 befindet sich eine Transporteinheit 52, die aus Lagen verschiedener Waren 45, 46, 47 und ebenfalls einer Euro-Palette 32 gebildet ist. Die Transporteinheit 52 ist auf einem Senkrechtförderer 49 angeordnet.

Wie in Teilbild b) zu sehen ist, wird in einem ersten Schritt die Wareneinheit 31 durch die Hebeeinrichtung 48 angehoben, bis die oberste Warenlage in der Lagengreifvorrichtung 44 angeordnet ist. Dann wird die Lagengreifvorrichtung 44 aktiviert, sodass die erste Lage der Waren gehalten wird. Dies kann beispielsweise durch eine Saug- oder Klemmvorrichtung bewirkt werden. Danach wird im Schritt c) die Wareneinheit 31 durch den Hebeeinrichtung 48 abgesenkt, während die Lagengreifvorrichtung 44 seitlich über den Lagenkommissionierplatz 37 bewegt wird, wo der Senkrechtförderer 49 die Transporteinheit 52 anhebt, bis die in der Lagengreifvorrichtung 44 gehaltene Warenlage an die oberste Warenlage in der Transporteinheit anstößt. Dann wird die Lagengreifvorrichtung 44 deaktiviert, sodass die Warenlage losgelassen wird und auf der Transporteinheit 52 abgelegt wird. Nunmehr kann die Lagengreifvorrichtung 44 wieder in die Position über dem Entnahmeplatz 36 zurückgeführt werden, um einen neuen Zyklus, also eine weitere Entnahme einer Warenlage und Ablage der Warenlage auf der Transporteinheit 52 vorzunehmen. Um unterschiedliche Waren zu kommissionieren kann in der Zwischenzeit die Wareneinheit 31 am Entnahmeplatz 36 ausgewechselt worden sein. Sobald die Transporteinheit 52 fertig kommissioniert ist, also vollständig beladen ist oder die vorgesehenen Warenlagen aufweist, wird die Transporteinheit 52 auf die zweite Ebene 50 angehoben, um dort in dem in Fig. 4 gezeigten Fördersystem 42 abtransportiert zu werden.

Anstelle der Hebeeinrichtung 48 und des Senkrechtförderers 49 zur Bewegung der Waren- und Transporteinheiten kann selbstverständlich auch die Lagengreifvorrichtung 44 höhenverstellbar ausgebildet sein.

Mit der gezeigten Kommissioniervorrichtung ist es somit möglich eine manuelle Kommissionierung mittels Kommissionierfahrzeugen in Kombination mit einem automatisierten Lager, insbesondere Hochregallager mit einer automatisierten Lagenkommissionierung zu kombinieren, sodass eine deutliche Effektivitätssteigerung ermöglicht wird, da bei Transporteinheiten, die mehrere gleiche Waren aufweisen sollen, eine schnelle automatisierte Lagenkommissionierung anstelle der manuellen Kommissionierung vorgenommen werden kann. Durch die entsprechende Verbindung von automatisierten Lagern, Lagendepalettiervorrichtung und Kommissionierstrecke ist ein flexibler Betrieb möglich, sodass Wareneinheiten je nach Bedarf ein- und ausgelagert werden können und auch kommissionierte Transporteinheiten fertig kommissioniert oder teilkommissioniert zwischengelagert werden können und/oder zwischen der manuellen Kommissionierung und der automatisierten Lagenkommissionierung hin und her wechseln können.

Obwohl die vorliegende Erfindung anhand des Ausführungsbeispiels detailliert beschrieben worden ist, ist für den Fachmann selbstverständlich, dass die Erfindung nicht auf dieses Ausführungsbeispiel beschränkt ist, sondern dass vielmehr Abwandlungen in der Weise möglich sind, dass einzelne Merkmale weggelassen oder andersartige Kombinationen von Merkmalen vorgenommen werden, ohne dass der Schutzbereich der beigefügten Ansprüche verlassen wird. Insbesondere offenbart die Erfindung sämtliche Kombinationen sämtlicher vorgestellter Einzelmerkmale.

## Patentansprüche

1. Vorrichtung zur Kommissionierung von Waren in eine Transporteinheit (52), die eine Vielzahl von Waren aufnehmen kann, wobei die Vorrichtung zur Kommissionierung ein automatisiertes Palettenlager mit mindestens einem Lagerfahrzeug (13,14,15,16), in welchem Wareneinheiten mit jeweils einer Vielzahl von Waren durch das Lagerfahrzeug zumindest teilweise automatisiert ein- und ausgelagert werden können, und mindestens eine Kommissionierstrecke umfasst, die eine Mehrzahl von Kommissionierplätzen (17,18,19,20,21,22,23,24,25,26) für Wareneinheiten und mindestens einen Kommissionierpfad aufweist, entlang dem sich ein Kommissionieriahrzeug (27,28) mit mindestens einer Transporteinheit bewegen kann,
**dadurch gekennzeichnet, dass**
mindestens eine Lagendepalettiervorrichtung (29,30) vorgesehen ist, die mit dem Palettenlager in der Weise verbunden ist, dass Wareneinheiten (31) aus dem Palettenlager automatisiert zu- und abführbar sind, und bei welcher Waren in ein oder mehreren Lagen lagenweise von einer Wareneinheit entnehmbar sind und automatisiert in eine Transporteinheit einbringbar sind.

2. Vorrichtung nach Anspruch 1,
**dadurch gekennzeichnet, dass**
zwei oder mehrere Palettenlager eine gemeinsame Lagendepalettiervorrichtung (29,30) aufweisen, wobei vorzugsweise jedes Palettenlager jeweils eine Lagergasse mit jeweils einem Regalfahrzeug aufweist und wobei insbesondere die Lagendepalettiervorrichtung zwischen zwei Lagergassen (2, 4; 1, 3) angeordnet ist, sodass sie zumindest den Kommissionierpfad nicht stört.

3. Vorrichtung nach einem der vorhergehenden Ansprüche"
**dadurch gekennzeichnet, dass**
die Vorrichtung modular aufgebaut ist, wobei jedes Modul mindestens ein Palettenlager, mindestens eine Kommissionierstrecke und mindestens eine Lagendepalettiervorrichtung (29,30) umfasst.

4. Vorrichtung nach einem der vorhergehenden Ansprüche,
**dadurch gekennzeichnet, dass**
die Lagendepalettiervorrichtung einen Lagenkommissionierplatz (37) umfasst, an dem eine Transporteinheit zur Aufnahme der depalettierten Warenlage bereit gestellt werden kann, wobei insbesondere der Lagenkommissionierplatz in der Kommissionierstrecke angeordnet ist und die Lagendepalettiervorrichtung so in einem Fördersystem zum Palettenlager angeordnet ist, dass die Wareneinheiten aus dem Palettenlager in der für die Lagendepalettiervorrichtung erforderlichen Sequenz bereit gestellt werden können.

5. Vorrichtung nach einem der vorhergehenden Ansprüche,
**dadurch gekennzeichnet, dass**
die Vorrichtung ein oder mehrere Kommissionierfahrzeuge (27,28) umfasst, die automatisch oder manuell steuerbar entlang der Kommissionierstrecke bewegbar sind,

6. Vorrichtung nach dem vorhergehenden Anspruch,
**dadurch gekennzeichnet, dass**
die Kommissionierstrecke und/oder das oder die Kommissionierfahrzeuge (27,28) optische und/oder akustische Anzeigevorrichtungen zur Anzeige der Kommissionieraufgabe aufweisen.

7. Vorrichtung nach einem der vorhergehenden Ansprüche,
**dadurch gekennzeichnet, dass**
die Kommissionierplätze (17 bis 26) der Kommissionierstrecke zumindest teilweise in Durchlaufkanälen eines Regals eines Hochregallagers angeordnet sind.

8. Vorrichtung nach einem der vorhergehenden Ansprüche,
**dadurch gekennzeichnet, dass**
das Palettenlager mindestens einen Auslagerungsplatz für Wareneinheiten (31) aufweist, der über ein Fördersystem mit der Lagendepalettiervorrichtung verbunden ist, wobei das Fördersystem einen kurzen Förderweg mit insbesondere wenigen Abzweigungen, Kreuzungen oder Einmündungen aufweist, vorzugsweise einen Förderweg, der weniger als 20 Wareneinheiten oder weniger als 15 Wareneinheiten gleichzeitig aufnehmen kann und/oder keine oder maximal eine Abzweigung, Kreuzung oder Einmündung aufweist.

9. Vorrichtung nach einem der vorhergehenden Ansprüche,
**dadurch gekennzeichnet, dass**
das Palettenlager mindestens einen Abgabeplatz für Wareneinheiten (31) aufweist, an dem eingelagerte, teilgefüllte Wareneinheiten (31) auf ein Kommissiomerfahrzeug überführbar sind, sodass aus teilgefüllten Wareneinheiten (31) Transporteinheiten werden.

10. Verfahren zur Kommissionierung von Waren in eine Transporteinheit, die eine Vielzahl von Waren aufnehmen kann, wobei eine Vorrichtung zur Kommissionierung bereit gestellt wird, die ein automatisiertes Palettenlager, mit mindestens einem Lagerfahrzeug (13 bis 16), in welches Wareneinheiten (31) mit jeweils einer Vielzahl von Waren durch das Lagerfahrzeug zumindest teilweise automatisiert ein- und ausgelagert werden können, und mindestens eine Kommissionierstrecke umfasst, die eine Mehrzahl von Kommissionierplätzen (17 bis 26) für Wareneinheiten und mindestens einen Kommissionierpfad aufweist, entlang dem sich ein Kommissiomerfahrzeug (27,28) bewegen kann, wobei Waren aus den Wareneinheiten in den Kommissionierplätzen der Kommissionierstrecke in eine Transporteinheit auf dem Kommissionierfahrzeug kommissioniert werden,
**dadurch gekennzeichnet, dass**
mindestens eine Lagendepalettiervorrichtung (29,30) bereit gestellt wird, die mit dem Palettenlager in der Weise verbunden ist, dass Wareneinheiten aus dem Palettenlager automatisiert zu der Lagendepalettiervorrichtung zu- und abgeführt werden, und bei welcher Waren lagenweise von einer Wareneinheit entnommen werden und automatisiert in eine Transporteinheit eingebracht werden.

11. Verfahren nach Anspruch 10,
**dadurch gekennzeichnet, dass**
die depalettierten Warenlagen unmittelbar automatisiert in eine Transporteinheit eingebracht werden.

12. Verfahren nach Anspruch 10 oder 11,
**dadurch gekennzeichnet, dass**
die Wareneinheiten in einer Sequenz aus dem mindestens einem Palettenlager ausgelagert werden, die der Sequenz der Stapelung der Waren in die Transporteinheit entspricht, wobei insbesondere die Sequenz zwischen Auslagerung und Stapelung kurz gehalten wird oder kleiner oder gleich 20 Wareneinheiten oder kleiner oder gleich 15 Wareneinheiten in einer Sequenz für die Auftragspalette ist.

13. Verfahren nach einem der Ansprüche 10 bis 12,
**dadurch gekennzeichnet, dass**
zumindest ein Teil der kommissionierten Transporteinheiten nur mit depalettierten Warenlagen oder gemischt mit depalettierten Warenlagen und kommissionierten Waren aus den Kommissionierplätzen kommissioniert werden.

14. Verfahren nach einem der Ansprüche 10 bis 13,
**dadurch gekennzeichnet, dass**
die Wareneinheiten (31) zumindest teilweise automatisiert von dem Palettenlager in die Kommissiomeiplätze gebracht und/oder zumindest teilweise rückgeführt werden.

15. Verfahren nach einem der Ansprüche 10 bis 14,
**dadurch gekennzeichnet, dass**
teilkommissionierte Transporteinheiten in dem Palettenlager, zwischengelagert werden und/oder weiteren Systemen zur Kommissionierung zur Verfügung gestellt werden.

## Claims

1. Device for picking goods into a transport unit (52), being able to receive a plurality of goods, wherein the device for picking comprises an automated pallet storage unit with at least one storage vehicle (13,14,15,16), in which units of goods having each a plurality of goods can be stored and retrieved by the storage vehicle in an at least partially automated way, and comprising at least one picking tour having a plurality of picking locations (17,18,19,20,21,22,23,24,25,26) for units of goods and at least one picking path, along which a picking vehicle (27,28) with at least one transport unit can move,
**characterized in that**
at least one layer depalletizing device (29,30) is provided, being connected to the pallet storage unit such that the units of goods (31) can be fed and discharged from the pallet storage unit in an automated way, and with which the goods can be withdrawn layer by layer in one or more layers from a unit of goods and can be introduced into a transport unit in an automated way.

2. Device according to claim 1,
**characterized in that**
two or more pallet storage units have a common layer depalletizing device (29,30), wherein each pallet storage unit has preferably one storage unit aisle, each with a rack vehicle, and wherein particularly the layer depalletizing device is arranged between two storage unit aisles (2, 4; 1, 3), so that at least it does not interfere with the picking path.

3. Device according to any one of the preceding claims,
**characterized in that**
the device is modularly constructed, each module comprising at least one pallet storage unit, at least one picking tour and at least one layer depalletizing device (29,30).

4. Device according to any one of the preceding claims,
**characterized in that**
the layer depalletizing device comprises a layer picking location (37), on which a transport unit can be provided to receive the depalletized layer of goods, wherein particularly the layer picking location is arranged in the picking tour and the layer depalletizing device is arranged in a conveyor system to the pallet storage unit, so that the units of goods from the pallet storage unit can be provided in the sequence required for the layer depalletizing device.

5. Device according to any one of the preceding claims,
**characterized in that**
the device comprises one or more picking vehicles (27,28), which can be moved along the picking tour, such that they can be controlled, in an automated or manual way.

6. Device according to the preceding claim,
**characterized in that**
the picking tour and/or the picking vehicle or vehicles (27,28) have optical and/or acoustic indication devices for indicating the picking task.

7. Device according to any one of the preceding claims,
**characterized in that**
the picking locations (17 to 26) of the picking tour are at least partially arranged in throughput channels of a rack of a high-rise storage unit.

8. Device according to any one of the preceding claims,
**characterized in that**
the pallet storage unit has at least one retrieve location for units of goods (31), which is connected to the layer depalletizing device via a conveyor system, wherein the conveyor system has a short conveyor route with particularly few turnoffs, crossings or junctions, preferably a conveyor route being able to receive less than 20 units of goods or less than 15 units of goods at the same time and/or having none or a maximum of one turnoff, crossing or junction.

9. Device according to any one of the preceding claims,
**characterized in that**
the pallet storage unit has at least one delivery location for units of goods (31), at which stored and partially filled units of goods (31) can be transferred to a picking vehicle, so that the partially filled units of goods (31) become transport units.

10. Method for picking goods in a transport unit, being able to receive a plurality of goods, wherein a device for picking is provided, which comprises an automated pallet storage unit with at least one storage vehicle (13 to 16), in which units of goods (31), each with a plurality of goods, can be stored and retrieved by the storage vehicle in an at least partially automated way, and comprising at least one picking tour having a plurality of picking locations (17 to 26) for units of goods and having at least one picking path, along which a picking vehicle (27,28) can move, wherein the goods from the units of goods in the picking locations of the picking tour are picked into a transport unit on the picking vehicle,
**characterized in that**
at least one layer depalletizing device (29,30) is provided, which is connected to the pallet storage unit such that the units of goods are fed and discharged from the pallet storage unit to the layer depalletizing device in an automated way, and with which the goods are withdrawn layer by layer from a unit of goods and are introduced into a transport unit in an automated way.

11. Method according to claim 10,
**characterized in that**
the depalletized layers of goods are immediately introduced into a transport unit in an automated way.

12. Method according to claim 10 or 11,
**characterized in that**
the units of goods are retrieved from the at least one pallet storage unit in a sequence corresponding to the sequence of stacking of the goods into the transport unit, wherein particularly the sequence between the retrieval and the stacking is kept close to or lower than or equal to 20 units of goods, or lower than or equal to 15 units of goods in a sequence for the order pallet.

13. Method according to any of claims 10 to 12,
**characterized in that**
at least one part of the picked transport units are picked only with depalletized layers of goods or mixed with depalletized layers of goods and picked goods from the picking locations.

14. Method according to any of claims 10 to 13,
**characterized in that**
the units of goods (31) are brought from the pallet storage unit into the picking locations and/or are at least partially returned in an at least partially automated way.

15. Method according to any of claims 10 to 14,
**characterized in that**
partially picked transport units in the pallet storage unit are temporarily stored and/or additional systems for picking are provided.

## Revendications

1. Dispositif de préparation de marchandises dans une unité de transport (52), qui peut recevoir une pluralité de marchandises, dans lequel le dispositif de préparation comporte un magasin de palettes automatisé avec au moins un véhicule de magasin (13, 14, 15, 16), dans lequel des unités de marchandises avec respectivement une pluralité de marchandises peuvent être entrées et sorties par le véhicule de magasin au moins partiellement de manière automatisée, et au moins un parcours de préparation qui présente une pluralité d'emplacements de préparation (17, 18, 19, 20, 21, 22, 23, 24, 25, 26) pour des unités de marchandises et au moins une voie de préparation, le long de laquelle un véhicule de préparation (27, 28) peut se déplacer avec au moins une unité de transport,
**caractérisé en ce que**
au moins un dispositif de dépalettisation de couche (29, 30) qui est relié au magasin de palettes de telle manière que des unités de marchandises (31) puissent être amenées et évacuées de manière automatisée du magasin de palettes, et pour lequel des marchandises dans une ou plusieurs couches peuvent être retirées par couches d'une unité de marchandises et peuvent être introduites de manière automatisée dans une unité de transport.

2. Dispositif selon la revendication 1,
**caractérisé en ce que**
deux ou plusieurs magasins de palettes présentent un dispositif de dépalettisation de couche (29, 30) commun, dans lequel de préférence, chaque magasin de palettes présente respectivement une allée de stockage avec respectivement un gerbeur et dans lequel en particulier le dispositif de dépalettisation de couche est agencé entre deux allées de magasin (2, 4, 1, 3) de sorte qu'il ne perturbe pas au moins la voie de préparation.

3. Dispositif selon l'une des revendications précédentes,
**caractérisé en ce que**
le dispositif est constitué de manière modulaire, dans lequel chaque module comporte au moins un magasin de palettes, au moins un parcours de préparation et au moins un dispositif de dépalettisation de couche (29, 30).

4. Dispositif selon l'une des revendications précédentes,
**caractérisé en ce que**
le dispositif de dépalettisation de couche comporte un emplacement de préparation de couche (37), sur lequel une unité de transport peut être mise à disposition pour la réception de la couche de marchandises dépalettisée, dans lequel en particulier l'emplacement de préparation de couches est agencé dans le parcours de préparation et le dispositif de dépalettisation de couche est agencé dans un système de transport vers le magasin de palettes de sorte que les unités de marchandises du magasin de palettes puissent être mises à disposition dans la séquence nécessaire pour le dispositif de dépalettisation de couche,

5. Dispositif selon l'une des revendications précédentes,
**caractérisé en ce que**
le dispositif comporte un ou plusieurs véhicules de préparation (27, 28) qui sont mobiles de manière commandable automatiquement ou manuellement le long du parcours de préparation.

6. Dispositif selon la revendication précédente,
**caractérisé en ce que**
la voie de préparation et/ou le ou les véhicules de préparation (27, 28) présentent des dispositifs d'affichage optiques et/ou acoustiques pour l'affichage de la tâche de préparation.

7. Dispositif selon l'une des revendications précédentes,
**caractérisé en ce que**
les emplacements de préparation (17 à 26) du parcours de préparation sont agencés au moins partiellement dans des canaux de passage d'une étagère d'un magasin à hauts rayonnages.

8. Dispositif selon l'une des revendications précédentes,
**caractérisé en ce que**
le magasin de palettes présente au moins un emplacement de sortie pour des unités de marchandises (31) qui est relié par un système de transport au dispositif de dépalettisation de couche, dans lequel le système de transport présente une courte voie de transport avec en particulier moins de bifurcations, croisements ou débouchés, de préférence une voie de transport qui peut recevoir simultanément moins de 20 unités de marchandises ou moins de 15 unités de marchandises et/ou ne présente aucune ou au maximum une bifurcation, un croisement ou un débouché.

9. Dispositif selon l'une des revendications précédentes,
**caractérisé en ce que**
le magasin de palettes présente au moins un emplacement de sortie pour des unités de marchandises (31), sur lequel des unités de marchandises remplies partiellement, entrées peuvent être transférées sur un véhicule de préparation de sorte que des unités de transport soient composées des unités de marchandises remplies partiellement (31).

10. Procédé de préparation de marchandises dans une unité de transport qui peut recevoir une pluralité de marchandises, dans lequel un dispositif de préparation est mis à disposition, lequel comporte un magasin de palettes automatisé avec au moins un véhicule de magasin (13 à 16), dans lequel des unités de marchandises (31) avec respectivement une pluralité de marchandises peuvent être entrées et sorties au moins partiellement de manière automatisée par le véhicule de magasin et au moins un parcours de préparation qui présente une pluralité d'emplacements de préparation (17 à 26) pour des unités de marchandises et au moins une voie de préparation, le long de laquelle un véhicule de préparation (27, 28) peut se déplacer, dans lequel des marchandises des unités de marchandises sont préparées dans les emplacements de préparation du parcours de préparation dans une unité de transport sur le véhicule de préparation,
**caractérisé en ce que**
au moins un dispositif de dépalettisation de couche (29, 30) est mis à disposition, lequel est relié au magasin de palettes de telle manière que des unités de marchandise du magasin de palettes soient amenées et évacuées de manière automatisée du dispositif de dépalettisation de couche, et pour lequel des marchandises sont retirées par couche d'une unité de marchandises et sont introduites de manière automatisées dans une unité de transport.

11. Procédé selon la revendication 10,
**caractérisé en ce que**
les couches de marchandises dépalettisées sont introduites de manière directement automatisée dans une unité de transport.

12. Procédé selon la revendication 10 ou 11,
**caractérisé en ce que**
les unités de marchandises sont sorties dans une séquence de l'au moins un magasin de palettes qui correspond à la séquence de l'empilement des marchandises dans l'unité de transport, dans lequel en particulier la séquence est maintenue courte entre la sortie et l'empilement ou est inférieure ou égale à 20 unités de marchandises ou inférieure ou égale à 15 unités de marchandises dans une séquence pour la palette de la commande.

13. Procédé selon l'une des revendications 10 à 12,
**caractérisé en ce que**
au moins une partie des unités de transport préparées est préparée seulement avec des couches de marchandises dépalettisées ou mélangées avec des couches de marchandises dépalettisées et des marchandises préparées à partir des emplacements de préparation.

14. Procédé selon l'une des revendications 10 à 13,
**caractérisé en ce que**
les unités de marchandises (31) sont amenées au moins partiellement de manière automatisée du magasin de palettes dans les emplacements de préparation et/ou sont ramenées au moins partiellement,

15. Procédé selon l'une des revendications 10 à 14,
**caractérisé en ce que**
des unités de transport préparées partiellement sont entreposées dans le magasin de palettes et/ou sont mises à disposition d'autres systèmes de préparation.
